# EUROPÄISCHE PATENTSCHRIFT

(11) **EP 2 109 704 B1**
(45) Veröffentlichungstag und Bekanntmachung des Hinweises auf die Patenterteilung: **08.10.2014**
(21) Anmeldenummer: 08707532.1
(22) Anmeldetag: 04.02.2008
(51) Int. Cl.: E04H 12/04, F03D 11/04, F03D 1/00

(54) **WINDKRAFTANLAGE**
WIND POWER PLANT
ÉOLIENNE

(30) Priorität: 06.02.2007 DE 102007006652
(43) Veröffentlichungstag der Anmeldung: 21.10.2009
(73) Patentinhaber: TimberTower GmbH, 30165 Hannover (DE)
(72) Erfinder: PRASS, Gregor, 22769 Hamburg (DE)
(74) Vertreter: Wetzel, Philipp
(86) Internationale Anmeldenummer: PCT/EP2008/000856
(87) Internationale Veröffentlichungsnummer: WO 2008/095667

(56) Entgegenhaltungen:
- WO-A-03/069099
- WO-A-2005/028781

## Beschreibung

Die Erfindung betrifft eine Windkraftanlage mit einem Turm, wobei der Turm ein Hohlkörper aus Holz ist, wobei der Turm aus Modulen in Gestalt von Segmenten aufgebaut ist, wobei die Segmente aus Holzplatten zusammengesetzt sind.

Windkraftanlagen der eingangs genannten Art sind dem Fachmann bekannt und geläufig.

Auf dem Turm der Windkraftanlage ist dabei eine Gondel angeordnet. An ihrem Ende ist die Gondel wiederum mit einem Rotor mit waagerechter Drehachse versehen, die mit einem Generator gekoppelt ist. Üblich ist der Einsatz von dreiblättrigen Rotoren, da diese einen relativ gleichmäßigen Lauf gewährleisten. Derartige Windkraftanlagen sind im Hinblick auf den Wirkungsgrad, mit dem die Leistung des Windes nutzbar ist, weit entwickelt. Dennoch weisen die bestehenden Windkraftanlagen deutliche wirtschaftliche Nachteile auf. So ergibt sich bspw. aufgrund des hohen Gewichts des Rotors und des Abstands des Rotors vom Mittelpunkt des Turms, auf dem die Gondel drehbar gelagert ist, ein erhebliches Moment auf dem Turm. Hieraus resultiert wiederum eine höhere Belastung des Turms mit entsprechenden Folgekosten bei der Konstruktion und Fertigung des Turms, die sich auch in hohen Materialkosten manifestiert.

Die wohl verbreiteste Bauform bei Türmen von Windkraftanlagen ist die Konstruktion aus Stahlrohren. Dabei werden die Lasten im Turm durch ein Rohr bzw. ein Fachwerk (Gitterturm) in den Boden geleitet. In der fachinternen Terminologie werden derartige Stahlrohre als Schalen bzw. Membranen und die Fachwerke als Stabwerksysteme bezeichnet. Diese fachinterne Terminologie entspringt statischen Betrachtungen.

Die Höhe der Türme von Windkraftanlagen variieren. Generell lässt sich konstatieren, dass die Energieausbeute mit der Höhe des Turmes einer Windkraftanlage korreliert, so dass Höhen von durchaus über 100 m erreicht werden. Man kann also sagen, dass nicht zuletzt auch ein wirtschaftlicher Zusammenhang aus anfallenden Baukosten und dem Ertrag aus Energiegewinnung besteht, wobei aus Erfahrung die anfallenden Baukosten mit der Bauhöhe der Windkraftanlage überproportional steigen. Es gibt Ansätze, Fachwerktürme (Gittertürme) aus Holz zu konstruieren, da Holz in ausreichendem Maße vorhanden und kostengünstig zu erwerben ist. Derzeit existieren jedoch keine Fachwerktürme für Windkraftanlagen aus Holz. Bei dem Versuch, Fachwerktürme für Windkraftanlagen aus Holz zu fertigen ergeben sich nämlich zwei gravierende Probleme. Eine Problematik ist es, dass die Geometrie des Turms in einem Punkt vorgegeben ist. Durch die Rotorabmessungen und die räumliche Nähe des sich bewegenden Rotorblattes kann der Turm am virtuellen Berührungspunkt nämlich nur eine eingeschränkte Ausdehnung haben.

Die Fachwerkstreben können in diesem Punkt des Turms nicht sehr weit auseinander stehen und der Turmdurchmesser kann nicht beliebig groß gewählt werden. Es handelt sich hierbei um das in der Fachterminologie so genannte "Tip-Tower-" bzw. Freiluftproblem. Die Weiterleitung der durch die Belastung entstehenden Momente erfolgt durch sehr hohe Normalkräfte. In der Bemessung resultieren daraus sehr große unhandlich Stabquerschnitte, die praktisch nicht einer Bearbeitung zugeführt werden können.

Zudem hat ein Fachwerkturm einer Windkraftanlage mehrer hundert Stäbe mit jeweils zwei bis drei Verbindungspunkten. Jeder dieser Verbindungspunkte muss konstruktiv so ausgeführt werden, dass er zum einen die auftretende Belastung aufnimmt und zum anderen der Witterung dauerhaft standhalten kann. Die technischen Möglichkeiten, diese Verbindungsstücke herzustellen, sind heutzutage gegeben. Diese Verbindungsmittel müssen jedoch in aufwendiger Einzelanfertigung hergestellt werden, wobei vorzugsweise Stabverbindungselemente in Frage kommen.

Ein erhebliches Problem bei der Konstruktion von Fachwerktürmen für Windkraftanlagen aus Holz stellt sicherlich die eingeschränkte Planungsfreiheit bei der Wahl der Geometrie im Bereich des Rotors da. Der Turm ist in seinem Außendurchmesser nicht ohne weiteres vergrößerbar. Auch gestaltet sich, wie bereits erwähnt, der Gesamtdurchmesser des Turms nach den Vorgaben der Rotoren. Dadurch, dass sich erhebliche Momente aus dem Gewicht des Rotors ergeben, können die entstehenden Kräfte in den Einzelbauteilen des Fachwerkturms nicht ohne weiteres aufgenommen werden.

WO2005/028781A2 zeigt einen abgespannten, turmartigen Mast für eine Windkraftanlage. Dieser besteht aus Turmsegmenten, die ineinander angeordnet sind und mittels Hilfsmitteln teleskopartig auseinander gezogen werden, um den turmartigen Mast zu errichten. Die Segmente sind dabei überlappend vorgesehen, derart, dass sie im errichteten Zustand bis zu 10 m ineinander ragen. Die Segmente selber sind zylindrisch und aus Wandabschnitten gebildet, die mittels Verbindungselementen miteinander mechanisch oder mittels Klebstoff verbunden sind. Die Wandabschnitte sind aus einem faserverstärkten Kunststoff gebildet. Alternativ können Holzplatten verwendet werden. Nachteilig dabei ist, dass Abspannungen notwendig sind, und dass die turmartigen Masten nur in einem komplizierten Verfahren errichtet werden können.

WO03069099A1 offenbart einen Betonturm für eine Windkraftanlage, der aus Wandelementen zusammengesetzt ist. Diese Wandelemente sind entweder einstückig gegossene über Eck gehende zweiflächige Betonelemente zum Erzeugen eines polygonalen Querschnitts oder Kreissegmentabschnitte aus Beton zum Erzeugen einen runden Querschnitts. Die Wandelemente sind über Schraubelemente, Spannseile und/oder Mörtel miteinander verbunden. Die Wandabschnitte werden einzeln angeliefert und entweder einzeln am Turm montiert oder vor Ort zu Ringen montiert und am Turm angebracht. Offenbart wird, dass es bei der Errichtung eines solchen Turms aus einzelnen Wandelementen darauf ankommt, dass keine langen Fugen in den Ecken des Polygons bzw. im Konus bei kreisförmigem Querschnitt entstehen. Vielmehr wird offenbart, dass die Wandelemente so anzuordnen sind, dass in jeder zweiten Ebene die Ecke durch einen massiven Abschnitt des Wandelements überbrückt wird bzw. die Fuge bei kreisförmigem Querschnitt jede zweite Ebene unterbrochen wird, da sonst in den Fugen Schwachpunkte entstehen.

Ausgehend von den dargelegten Nachteilen sowie unter Würdigung des aufgezeigten Standes der Technik bei Windkraftanlagen der eingangs genannten Art liegt der vorliegenden Erfindung die Aufgabe zugrunde, eine Windkraftanlage der eingangs genannten Art soweit auszubilden, dass die Herstellungskosten bei Windkraftanlagen bei Aufrechterhaltung eines hohen Wirkungsgrades, mit dem die Leistung des Windes nutzbar ist, weiter gesenkt werden können, wobei der Bau des Turmes mit einfachen konstruktiven Maßnahmen einhergeht.

Diese Aufgabe wird durch eine Windkraftanlage mit den in Anspruch 1 angegebenen Merkmalen gelöst. Vorteilhafte Ausgestaltungen und zweckmäßige Weiterbildungen der vorliegenden Erfindung sind in den Unteransprüchen gekennzeichnet.

Gemäß der Erfindung ist der Turm ein Hohlkörper aus Holz bei dem die Segmente konisch ausgeformt sind, die Segmente aus einzelnen trapezförmigen Holzplatten zusammengesetzt sind, die über ein Verbindungsmittel miteinander verbunden sind, wobei das Verbindungsmittel ein Klebstoff ist.

Die Vorteile der Erfindung liegen in der Konstruktion. Die Teilstücke können vor Ort einfach montiert werden. Bspw. können sich die Teilstücke durch zusammen geklebte Holzplatten zusammensetzen. Durch die einfache Montage der Teilstücke vor Ort ergeben sich im Vergleich zu den aus dem Stand der Technik bekannten Konstruktionen Vorteile in der Logistik. Aus Holzplatten zusammen gesetzte Teilstücke können prinzipiell in unmittelbarer Umgebung des Standortes der Windkraftanlage hergestellt werden. Zudem fallen die Teilstücke handlich aus, so dass sich komplizierte Schwerlasttransporte über weite Wege vermeiden lassen (es ist üblich, die aus dem Stand der Technik bekannten Türme für Windkraftanlagen segmentweise herzustellen und zu transportieren. Die Segmente sind sehr groß und benötigen schwere Transportmittel.). Ein weiterer Vorteil liegt in der geschlossenen Bauweise der Holztürme. Die geschlossene Bauweise der Holztürme trägt dazu bei, dass die notwendigen Verbindungsmittel im Vergleich zu Flächentragwerken in geschützter Lage sind. Insofern unterliegt die erfindungsgemäße Windkraftanlage weniger dem Einfluss der Witterung.

Hinzu kommt, dass Holz gegenüber Beton und Stahl Vorteile aufweist. Beton und Stahl sind teure und knappe Ressourcen, die zudem nur unter Inkaufnahme von großen CO₂-Emissionen zur Verfügung stehen. Auch sind die Preise am Weltmarkt für Stahl in jüngster Vergangenheit gravierend gestiegen. Holz ist dabei leicht verfügbar und kann vergleichsweise leicht bearbeitet werden. Dabei ist die Wertschöpfung der Konstruktion mittels Holzwerkstoffen nicht lokal gebunden, sondern kann von ortsansässigen Betrieben erbracht werden. Betrachtet man dagegen die Fertigung moderner Stahlrohrtürme, so ist diese mit Schweißarbeiten allerhöchster Güte verbunden, die nur von spezialisierten Fachbetrieben durchgeführt werden können.

Um der Statik zu genügen, sieht eine vorteilhafte Ausgestaltung der Erfindung vor, dass der Querschnitt des Turms zum Boden hin steigt. Die Segmente können dabei konisch ausgeformt sein, d. h. der Durchmesser der Türme steigt zum Boden hin an. Die konischen Segmente können bspw. 20 bis 30 m Länge aufweisen und mit beidseitigen Flanschen versehen sein, um diese unmittelbar am Standort zu verschrauben. Dadurch, dass der Durchmesser zum Boden hin steigt, steigt die Widerstandsfähigkeit des Turms. Auch wird durch die konische Ausformung der Materialeinsatz reduziert.

Vorzugsweise weisen die Segmente des Turms einen polygonen Querschnitt auf. Insbesondere kann das Polygon ein Viereck oder ein Fünfeck sein. Zur Herstellung der Segmente können Holzplatten dienen, die aneinandergefügt und verleimt werden. Denkbar sind aber auch andere Verbindungsmittel, um die Holzplatten miteinander zu verbinden.

Eine praktikable Variante der Erfindung sieht vor, dass die Module bzw. Segmente miteinander verleimt sind. Die Verleimung stellt bei Holzteilen eine kostengünstige und einfache Verbindungsart dar. Denkbar ist aber auch, dass die Module bzw. Segmente über Bolzen miteinander verbunden sind. Eine alternative Verbindung stellen auch Segmente mit beidseitigen Flanschen dar, die direkt am Standort der Windkraftanlage verschraubt werden können.

Eine weitere Verbindung für Segmente bzw. Module kann über plane Holzplatten erfolgen, die zwischen den Modulen bzw. Segmenten angeordnet sind. Die Module bzw. Segmente können dabei mit den Platten verleimt sein.

Der Turm kann darüber hinaus unterschiedliche Arten von Holz aufweisen. Als Auswahlkriterien für Hölzer können die Härte und das Gewicht dienen. Leichte Holzarten sind bspw. Fichte, Tanne, Ahorn, Birke, Erle, Kiefer, Linde, Nussbaum oder Kirschbaum. Dabei können die einzelnen Segmente auch unterschiedliche Holzarten aufweisen. Gleiches gilt bei der Verwendung von Holzwerkstoffen auch für Holzplatten zur Herstellung der Segmente.

Eine weitere vorteilhafte Ausgestaltung der Erfindung sieht vor, dass der Turm in Leichtbauweise gefertigt ist. Der Turm gilt nämlich nach wie vor als "schwerwiegender Teil einer Windkraftanlage", was sich auf die Transportkosten niederschlägt.

Vorzugsweise ist der Turm an seinem oberen Ende und/oder an seinem unteren Ende geschlossen. Dazu können beispielsweise Holzplatten vorgesehen sein, die auf dem obersten Segment und/oder unterhalb des untersten Segments und mit diesen verbunden angeordnet sind.

Ausführungsbeispiele der Erfindung werden im Folgenden anhand der Zeichnungen näher erläutert

Es zeigen in schematischen Darstellungen:
- Fig. 1a und 1b: eine erfindungsgemäße Windkraftanlage in einer Vorder- und in einer Seitenansicht;
- Fig. 2: einen Turm der erfindungsgemäßen Windkraftanlage;
- Fig. 3a: Segmente des Turms, die übereinander angeordnet werden und
- Fig. 3b: in Explosionsdarstellung den Zusammenbau eines Segments des Holzturms gemäß der Erfindung.

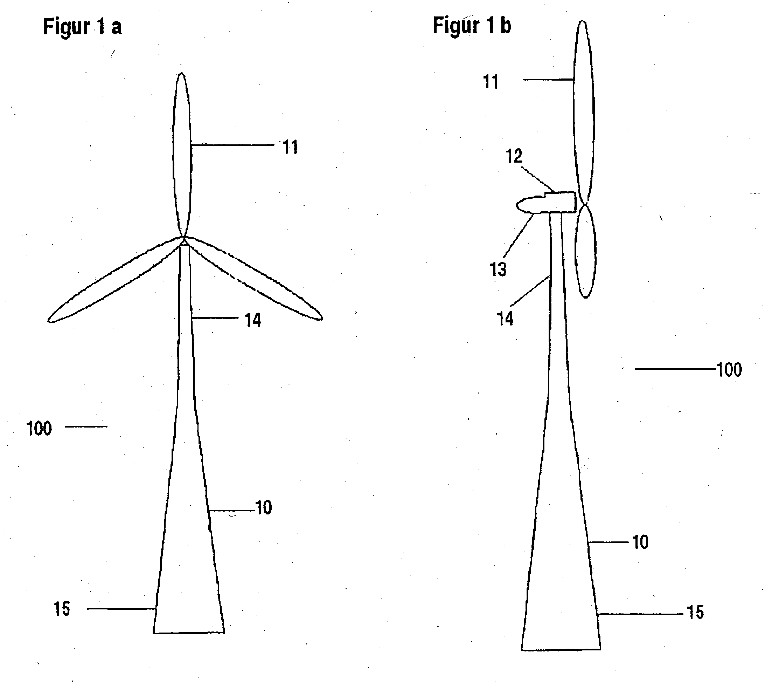

In Figur 1a und b ist eine erfindungsgemäße Windkraftanlage in einer Vorder- und in einer Seitenansicht dargestellt und mit dem Bezugszeichen 100 versehen.

Die Windkraftanlage 100 besteht aus einem Turm 10, einer auf das freie Ende des Turms um eine vertikale Achse drehbar gelagerten Gondel 13, einer von der Gondel gelagerten Rotorwelle 12 und einem an die Rotorwelle 12 angesetzten, aus einer Mehrzahl von Rotorblättern bestehenden Rotor 11.

Die Höhe des Turms 10 ergibt sich aus der gewünschten Narbenhöhe des Rotors 11 und diese aus dem gewünschten Durchmesser des Rotors 11 je nach gewünschter Leistung der Windkraftanlage. Die Höhe des Turms 10 kann somit bis zu 100 m aufweisen. Der Turm 10 ist ein Hohlkörper aus Holz und verjüngt sich vom Sockelbereich 15mit steigender Höhe. Wie man aus der Figur 1b erkennen kann, ist die Rotornarbe soweit von der Turmspitze 14 angeordnet, dass zwischen den Rotorblättern 11 und der Außenseite des Turms 10 ein Abstand verbleibt, so dass ein Kontakt zwischen rotierenden Rotorblättern 11 und Turm 10 ausgeschlossen ist.

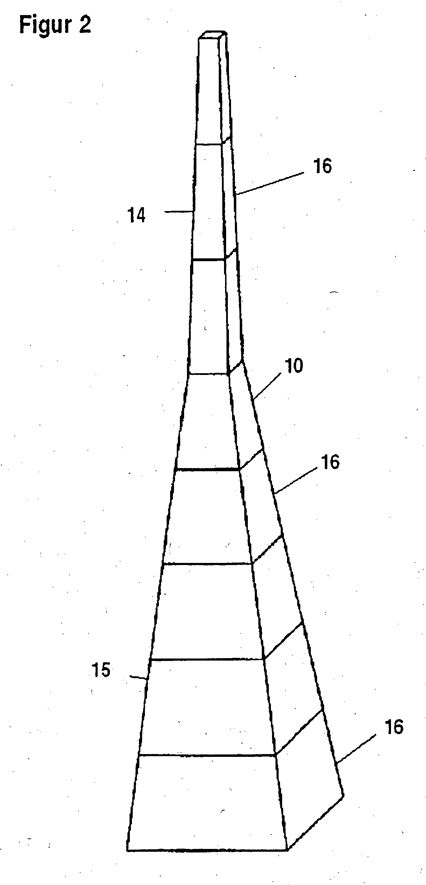

Die in Fig. 2 dargestellte Ausführungsform des Turms 10 besteht aus insgesamt 8 aufeinander angeordneten Segmenten 16, die bspw. miteinander verleimt sein können. Die Länge der übereinander angeordneten Segmente 16 kann gleich sein, aber auch, wie in der Ausführungsform dargestellt, unterschiedlich bemessen sein. Bei der hier dargestellten Ausführungsform werden die Höhen der Segmente 16 nach oben hin größer. Denkbar ist aber auch, dass die Länge der Segmente 16 gleich groß ist.

Die Geometrie der äußeren Peripherie der Segmente 16 kann unterschiedlich sein. Denkbar ist, dass die äußere Peripherie der Segmente 16 kreisrund ausgebildet ist. In der hier dargestellten Ausführungsform haben die Segmente jedoch einen polygonförmigen Durchmesser, vorzugsweise den eines Vierecks. Zudem geht aus Figur 2 hervor, dass die einzelnen Segmente 16 mit ihrem jeweils größeren Durchmesser auf die Unterseite des jeweils darunter liegenden Segments 16, also auf den kleineren Durchmesser des jeweils unten liegenden Segments 16 aufgesetzt sind.

Der Turm 10 schließt oben mit einem Segment 16 ab, das in einer hier verwendeten Terminologie als Turmkopf bezeichnet wird. Auf dem Turmkopf befindet sich die hier nicht dargestellte Gondel 13, die bspw. Quer- und Längsabmessungen von 5m x 3m oder von 6m x 4m aufweisen kann. Die Holzkonstruktion des Turms erlaubt es durchaus, dass die Gondel 13 mit dem in ihr befindlichen Generator und Getriebe sowie dem Gewicht des Rotors 11 mehrere Tonnen aufweisen kann. Diese Abmessungen und Gewichte variieren je nach Ausführungsform. Von daher dienen diese Angaben lediglich als Beispielsangaben, so dass die Erfindung selbstverständlich darauf nicht beschränkt ist. Der Turm 10 kann an seinem oberen und unteren Ende über Holzplatten verschlossen sein.

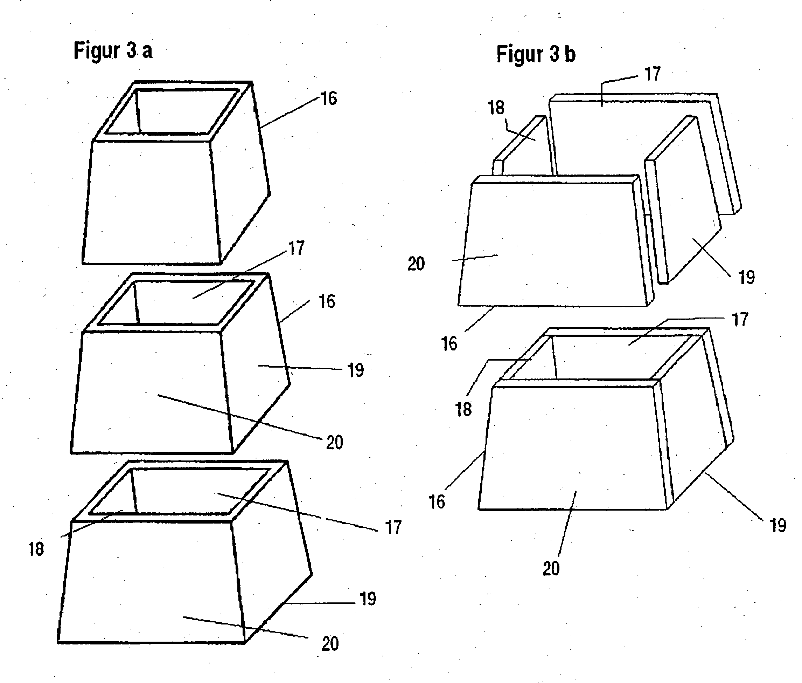

Wie aus Figur 3 a hervorgeht, sind die Module in Gestalt von Segmenten 16 übereinander angeordnet. Die einzelnen Segmente 16 bestehen aus Holzplatten 17, 18, 19 20, die miteinander verbunden sind. Die Verbindung kann in Gestalt einer Verleimung erfolgen. Die Querschnitte der Segmente 16 steigen zum Boden des Turms. Die Segmente 16 können dabei eine unterschiedliche Ausformung erfahren. In der hier dargestellten Ausführungsform liegen die Segmente 16 als Polygone vor, die aus den vier Holzplatten 17, 18, 19, 20 bestehen, wobei die Holzplatten 17, 18, 19, 20 eine trapezförmige Ausgestaltung haben. Sämtliche Holzplatten 17, 18, 19, 20 eines Segmentes 16 weisen dabei identische Abmessungen auf, wobei die trapezförmigen Flächen zur Turmspitze innerhalb eines Segmentes 16 hin kleiner werden. Auf diese Weise ist gewährleistet, dass sich der Turm nach oben hin verjüngt. Die einzelnen Segmente 16 sind dabei unmittelbar, d. h. ohne Zwischenschaltung eines weiteren Teils aufeinander angeordnet. Denkbar ist aber auch, dass zwischen den Segmenten 16 Holzplatten angeordnet und mit diesen verklebt sind, um die Verbindung zwischen den Segmenten 16 herzustellen. Die Segmente 16 sind passgenau aufeinander angeordnet, d. h. der kleinste Umfang eines Segmentes 16 ist kongruent mit dem größten Umfang des darauf folgenden Segmentes 16.

Figur 3b demonstriert den einfachen Zusammenbau eines Segments 16 aus Holzplatten17, 18, 19, 20. Die Holzplatten 17, 18, 19, 20 können in einem Vorprozess direkt vor Ort einer Windkraftanlage hergestellt werden. Durch Verleimung der einzelnen in dieser Ausführungsform trapezförmigen Holzplatten 17, 18, 19, 20 entsteht ein Segment 16 des Holzturms.

### Bezugszeichenliste:

- 100: Windkraftanlage
- 10: Turm
- 11: Rotor
- 12: Rotorwelle
- 13: Gondel
- 14: Turmspitze
- 15: Sockelbereich
- 16: Segmente
- 17: Holzplatte
- 18: Holzplatte
- 19: Holzplatte
- 20: Holzplatte

## Patentansprüche

1. Windkraftanlage (100) mit einem Turm (10), wobei der Turm (10) ein Hohlkörper aus Holz ist, wobei der Turm (10) aus Modulen in Gestalt von Segmenten (16) aufgebaut ist, wobei die Segmente (16) aus Holzplatten (17, 18, 19, 20) zusammengesetzt sind, **dadurch gekennzeichnet, dass** die Holzplatten trapezförmig sind, dass die Segmente (16) übereinander angeordnet sind, dass die Segmente (16) konisch ausgeformt sind, dass die Holzplatten über ein Verbindungsmittel einzeln miteinander verbunden sind, und dass das Verbindungsmittel ein Klebstoff ist..

2. Windkraftanlage nach Anspruch 1, **dadurch gekennzeichnet, dass** der Querschnitt des Turms (10) zum Boden hin steigt.

3. Windkraftanlage nach Anspruch 1 oder 2, **dadurch gekennzeichnet, dass** die Segmente (16) einen polygonen Querschnitt aufweisen, bevorzugt einen viereckigen Querschnitt oder einen fünfeckigen Querschnitt..

4. Windkraftanlage nach einem der Ansprüche 1 bis 3, **dadurch gekennzeichnet, dass** die Module bzw. Segmente (16) miteinander verleimt sind und/oder dass die Module bzw. Segmente (16) über Bolzen miteinander verbunden sind.

5. Windkraftanlage nach einem der Ansprüche 1 bis 4, **dadurch gekennzeichnet, dass** zwischen den Modulen bzw. Segmenten (16) Holzplatten angeordnet sind, die die Verbindungen zwischen den Modulen bzw. Segmenten (16) herstellen.

6. Windkraftanlage nach einem der Ansprüche 1 bis 5, **dadurch gekennzeichnet, dass** der Turm (10) unterschiedliche Arten von Holz aufweist.

7. Windkraftanlage nach einem der Ansprüche 1 bis 6, **dadurch gekennzeichnet, dass** der Turm (10) in Leichtbauweise gefertigt ist.

8. Windkraftanlage nach einem der Ansprüche 1 bis 7, **dadurch gekennzeichnet, dass** der Turm (10) an seinem oberen und/oder unteren Ende geschlossen ist.

9. Windkraftanlage nach einem der Ansprüche 1 bis 8, **dadurch gekennzeichnet, dass** die Holzplatten (17, 18, 19, 20) aus einem Holzwerkstoff hergestellt sind.

10. Windkraftanlage nach einem der Ansprüche 1 bis 9, **dadurch gekennzeichnet, dass** die Holzplatten (17, 18, 19, 20) aus verschiedenen Holzarten bestehen.

## Claims

1. Wind turbine (100) having a tower (10), wherein the tower (10) is a hollow body made of wood, wherein the tower (10) is constructed from modules in the form of segments (16), wherein the segments (16) are composed of wood panels (17, 18, 19, 20), **characterized in that** the wood panels are trapezoidal, **in that** segments (16) are arranged above one another, **in that** the segments (16) are shaped conically, **in that** the wood panels are individually connected to one another via a connecting means, and **in that** the connecting means is an adhesive.

2. Wind turbine according to Claim 1, **characterized in that** the cross section of the tower (10) increases towards the bottom.

3. Wind turbine according to Claim 1 or 2, **characterized in that** the segments (16) have a polygonal cross section, preferably a quadrilateral cross section or a pentagonal cross section.

4. Wind turbine according to one of Claims 1 to 3, **characterized in that** the modules or segments (16) are bonded to one another, and/or **in that** the modules or segments (16) are connected to one another via bolts.

5. Wind turbine according to one of Claims 1 to 4, **characterized in that** wood panels which produce the connections between the modules or segments (16) are arranged between the modules or segments (16).

6. Wind turbine according to one of Claims 1 to 5, **characterized in that** the tower (10) has different types of wood.

7. Wind turbine according to one of Claims 1 to 6, **characterized in that** the tower (10) is manufactured with a lightweight construction.

8. Wind turbine according to one of Claims 1 to 7, **characterized in that** the tower (10) is closed at its upper and/or lower end.

9. Wind turbine according to one of Claims 1 to 8, **characterized in that** the wood panels (17, 18, 19, 20) are produced from a wood-base material.

10. Wind turbine according to one of Claims 1 to 9, **characterized in that** the wood panels (17, 18, 19, 20) consist of different types of wood.

## Revendications

1. Éolienne (100) comprenant une tour (10), la tour (10) étant un corps creux en bois, la tour (10) étant constituée de modules en forme de segments (16), les segments (16) étant constitués de plaques de bois (17, 18, 19, 20), **caractérisée en ce que** les plaques de bois sont de forme trapézoïdale, **en ce que** les segments (16) sont disposés les uns au-dessus des autres, **en ce que** les segments (16) ont une forme conique, **en ce que** les plaques de bois sont connectées individuellement les unes aux autres par le biais d'un moyen de connexion et **en ce que** le moyen de connexion est un adhésif.

2. Éolienne selon la revendication 1, **caractérisée en ce que** la section transversale de la tour (10) augmente en direction du sol.

3. Éolienne selon la revendication 1 ou 2, **caractérisée en ce que** les segments (16) présentent une section transversale polygonale, de préférence une section transversale carrée ou une section transversale pentagonale.

4. Éolienne selon l'une quelconque des revendications 1 à 3, **caractérisée en ce que** les modules ou les segments (16) sont collés les uns aux autres et/ou **en ce que** les modules ou les segments (16) sont connectés les uns aux autres par des boulons.

5. Éolienne selon l'une quelconque des revendications 1 à 4, **caractérisée en ce qu'**entre les modules ou les segments (16) sont disposées des plaques de bois qui établissent les connexions entre les modules ou les segments (16).

6. Éolienne selon l'une quelconque des revendications 1 à 5, **caractérisée en ce que** la tour (10) présente différents types de bois.

7. Éolienne selon l'une quelconque des revendications 1 à 6, **caractérisée en ce que** la tour (10) est fabriquée avec une construction légère.

8. Éolienne selon l'une quelconque des revendications 1 à 7, **caractérisée en ce que** la tour (10) est fermée au niveau de son extrémité supérieure et/ou inférieure.

9. Éolienne selon l'une quelconque des revendications 1 à 8, **caractérisée en ce que** les plaques de bois (17, 18, 19, 20) sont fabriquées en un matériau en bois.

10. Éolienne selon l'une quelconque des revendications 1 à 9, **caractérisée en ce que** les plaques de bois (17, 18, 19, 20) se composent de différents types de bois.
